# EUROPEAN PATENT SPECIFICATION

(11) **EP 3 600 607 B1**
(45) Date of publication and mention of the grant of the patent: **03.03.2021**
(21) Application number: 18715905.8
(22) Date of filing: 28.03.2018
(51) Int. Cl.: B01D 53/047, F16K 3/26, F16K 3/34, F16K 11/04, B01D 53/04

(54) **SHUTTLE VALVE**
WECHSELVENTIL
VANNE DE NAVETTE

(30) Priority: 30.03.2017 GB 201705123; 30.03.2017 GB 201705122
(43) Date of publication of application: 05.02.2020
(73) Proprietor: Parker Hannifin Manufacturing Limited, Hemel Hempstead, Hertfordshire HP2 4SJ (GB)
(72) Inventor: GRAHAM, Michael, Cramlington Northumberland NE23 3YT (GB)
(74) Representative: Orr, Robert
(86) International application number: PCT/GB2018/050811
(87) International publication number: WO 2018/178661

(56) References cited:
- WO-A1-2010/080161
- CN-A- 102 743 958
- DE-A1- 2 158 010
- DE-A1-102013 005 370
- US-A1- 2004 020 366

## Description

The invention relates to a shuttle valve.

Shuttle valves are well known for controlling the flow of fluid between one of first and second primary conduits, and a secondary conduit. For example a shuttle valve might be used to control flow of fluid from one of two fluid sources to a single fluid outlet. A shuttle valve can include a part which can move between a first position in which fluid can flow between the first primary conduit and the secondary conduit with flow of fluid between the second primary conduit and the secondary conduit being blocked, and a second position in which fluid can flow between the second primary conduit and the secondary conduit with flow of fluid between the first primary conduit and the secondary conduit being blocked. Movement of the movable part between its first and second positions can be as a result of fluid in the primary conduits acting on the movable part, directly or indirectly.

A movable part of a shuttle valve can translate within a chamber between opposite ends of the chamber. The chamber can have openings in its end walls for fluid to flow between the chamber and the primary conduits. The movable part of the shuttle valve can close one of the openings when in contact with that end wall.

It can be useful to replace parts of a shuttle valve which wear when in use. For example, a movable part of a shuttle valve which is relied on to close an opening can be made from a deformable material such as a rubber to facilitate the formation of a seal. A deformable material can degrade with use.

US Patent Publication no. US-2004/0020366A1 discloses an adsorption gas dryer which has a first drying tower and a second drying tower each having a first port and a second port through which gas can pass into or out of the tower, a first manifold and a second manifold connected respectively to the first and the second ports of both towers, the manifolds each including integral gas passages, each port of the towers being in communication with a gas passage, and the manifolds each including at least one integral valve seat upon which a valve actuator is mounted to constitute a valve for controlling flow of gas through the gas passages, wherein the second manifold has two exhaust valves for controlling purge gas.

German Patent Publication no. DE102013005370A1 discloses a change-over valve in a drying plant for gas having a first dryer unit and a second dryer unit, a gas stream emerging from the first dryer unit in a first switching position and from the second dryer unit in a second switching position. There is an outlet opening through which at least the greater part of the gas flow can exit the shuttle valve, a first inlet opening into which gas can enter the shuttle valve and a second inlet opening into which gas can enter the shuttle valve. A first flow path for gas leads from the first inlet opening to the outlet opening, and a second flow path for gas leads from the second inlet opening to the outlet opening. There is a valve body which opens the first flow path in a first switching position and the first flow path in a second switching position, and closes with a third flow path for gas, which leads from the first inlet opening to the second inlet opening, or which leads from the outlet opening to the second inlet opening, without being closed by the valve body in the first switching position of the valve body.

Chinese Patent Publication no. CN-102743958A relates to the technical field of purifying and drying, and discloses a reversing device comprising an adsorption bucket and a regeneration bucket, wherein the adsorption bucket and the regeneration bucket can reverse roles. A scavenging air valve is arranged at the junction of the air inlet tube of the adsorption bucket and the air inlet tube of the regeneration bucket, and a scavenging air valve is arranged at the junction of the air outlet tube of the adsorption bucket and the air outlet tube of the regeneration bucket. The left-and-right movement of a piston is controlled via the pressures of gases in the adsorption bucket and the regeneration bucket, thus controlling the opening and closing of the left valve and right valve of each scavenging air valve, and then realizing the alternating work of the adsorption bucket and the regeneration bucket, without additional control components.

International Patent Publication no. WO-2010/080161A1 discloses a shuttle valve with a valve body comprising a first port, a second port and a third port for use in high pressure fluid transport applications. The valve body comprises a robust flow plug that can shuttle between the first port and the second port to control the working fluid flow to a flow path wherein the robust flow plug is sufficiently robust such that the shuttle valve remains in service for a period of at least about 2 years, while cycling during service on the average of about once every 2 minutes to about once every 30 minutes.

German Patent Publication no. DE2158010A1 discloses a two-way valve for controlling a pneumatically or hydraulically actuated device, in particular a drive for high-voltage electrical switches, by means of two actuating valves provided for the same control process. The two-way valve comprises a housing in which a ball is moved by a drive means in one direction or the other to control outlet openings for driving in such a way that when the valve is acted on from one side, the ball locks a non-acted upon connection side, while when it is acted on from two sides, the ball blocks approximately in the middle of the valve housing, so that both flows of the drive means for the drive are released. It is necessary to block the valve that is not actuated so that the drive means does not largely flow out of this valve, which is normally in the venting position, via this vent, without reaching the controlled drive.

A shuttle valve is provided in which a shuttle valve module which contains a movable seal member fits into a cavity in a system housing, the module comprising a body and a telescoping end cap, and a wedge member which can be inserted between the body and the end cap to urge the ends walls of the module into sealing engagement with the facing end walls of the cavity in the system housing.

A shuttle valve module assembly for fitting in a cavity in a valve housing to control flow of fluid between one of first and second primary ports in the housing and a secondary port in the housing is therefore provided, the assembly comprising:
a. a shuttle valve module having first and second end walls and a side wall, and an elongate chamber extending between the end walls, the end walls and the side wall having first, second and third openings respectively which can communicate with first, second and third ports respectively in a valve housing,
b. a seal member which can move within the elongate chamber in the shuttle valve module between a first position in which it forms a seal which prevents flow of fluid between the first opening and the third opening while allowing flow of fluid between the second opening and the third opening, and a second position in which it forms a seal which prevents flow of fluid between the second opening and the third opening while allowing flow of fluid between the first opening and the third opening,
c. a wedging member,
in which the shuttle valve module comprises a body and an end cap which provides one of the end walls of the shuttle valve module, the body and the end cap being arranged so that one can slide relative to the other telescopically, and so that the wedging member can be inserted between the body and the end cap to cause the end cap to be displaced relative to the body so as to increase the distance between the first and second end walls of the module.

A shuttle valve can include the shuttle valve module assembly discussed above and having optional features as discussed below, together with a system housing which defines a cavity in which the shuttle valve module can be fitted, the cavity having first and second end walls and a side wall, with a first port in the first wall for connection to the first primary conduit, a second port in the second wall for connection to the second primary conduit, and a third port in the side wall for connection to the secondary conduit.

A shuttle valve for controlling flow of fluid between one of first and second primary conduits and a secondary conduit is also disclosed, the valve comprising:
a. a system housing which defines a cavity and which has first and second end walls and a side wall, with a first port in the first wall for connection to the first primary conduit, a second port in the second wall for connection to the second primary conduit, and a third port in the side wall for connection to the secondary conduit,
b. a shuttle valve module which can be fitted into the cavity in the system housing, the shuttle valve module having first and second end walls and a side wall, and an elongate chamber extending between the end walls, each of the end walls and the side wall having an opening in it which communicates with the first, second and third ports respectively,
c. a seal member which can move within the elongate chamber in the shuttle valve module between a first position in which it forms a seal which prevents flow of fluid between the first port and the third port while allowing flow of fluid between the second port and the third port, and a second position in which it forms a seal which prevents flow of fluid between the second port and the third port while allowing flow of fluid between the first port and the third port,
d. a wedging member,
in which the shuttle valve module comprises a body and an end cap which provides one of the end walls of the shuttle valve module, the body and the end cap being arranged so that one can slide relative to the other telescopically, and so that the wedging member can be inserted between the body and the end cap to cause the end cap to be displaced relative to the body, so as to change the configuration of the module from a first configuration to a second configuration in which the distance between the first and second end walls of the module is greater than in the first configuration.

The shuttle valve module can be provided separately from the system housing, for use with a system housing.

The shuttle valve has the advantage that the seals are formed between the end walls of the shuttle valve module and the facing end walls of the cavity when the module is in the cavity in the system housing and is in its second configuration. Removing the wedging member from its position between the module body and the end cap allows the configuration of the module to change to its first configuration in which its length between its end walls is less than when in its second configuration. This allows the module to be removed from the cavity in the system housing with little or no resistance caused by the seals between the end walls of the shuttle valve module and the facing end walls of the cavity. This reduces the likelihood of seal components which provide the seal between the end walls of the shuttle valve module and the facing end walls of the cavity being damaged when the module is removed. The reduction in the resistance to removal of the module caused by the seals also facilitates removal of the module. This has advantages for maintenance of the valve, for example making it easier to remove the module for replacement of the seal member.

The cavity within the shuttle valve module will frequently have an approximately constant cross-section over most of its length, for example over at least about 75% of its length. The cross-section of the cavity can be circular. This has the advantage that it facilitates the formation of a seal between one of the sealing surfaces at or towards an end of the cavity and a seal member which is rounded (for example spherical). As discussed below, the internal faces of one or each of the end walls of the cavity in the shuttle valve module can be inclined to the axis of the module.

Optionally, the end cap has a cylindrical portion which is a sliding fit in the body of the shuttle valve module, and a flange. The difference between the external dimension of the flange and the corresponding external dimension of the module body can be not more than 15% of the external dimension of the module body. For example, the external dimension of the flange can be approximately equal to the external dimension of the module body. The dimension will be a diameter when the module body is circular when viewed in cross-section.

Optionally, the wedging member can be fitted between the flange of the end cap and the end wall of the module body at the end of the body in which the cylindrical portion of the end cap is received. Optionally, the wedging member acts on the flange of the end cap and the end wall of the module body at first and second points which are on opposite sides of the axis of the module (which extends between the end walls of the module). The wedging member can comprise first and second limbs which can be fitted between the end cap flange and the end wall of the body on first and second opposite sides of the axis. Optionally, the first and second limbs of the wedging member are joined together. For example, the wedging member can be approximately U-shaped.

Optionally, the wedging member has a tapered lead-in portion. This can facilitate insertion of the wedging member between the module body and the end cap. It will often be preferred that the portion of the wedging member which contacts the module body and the end cap when the wedging member is fully inserted has a constant thickness. That thickness of the wedging member should be arranged so that the distance between the end walls of the module when the wedging member is in position between the shuttle body and the end cap is sufficient for the end walls of the module to be urged into sealing engagement with the facing end walls of the cavity in the system housing.

Optionally, the ratio of the width of the wedging member to the distance between the end walls of the cavity in the system housing is at least about 0.04. Optionally, the ratio of the width of the wedging member to the distance between the end walls of the cavity in the system housing is not more than about 0.12. For example, the ratio of the width of the wedging member to the distance between the end walls of the cavity in the system housing can be about 0.06.

Optionally, a groove is provided in the outwardly facing face of at least one of the end walls of the shuttle valve module and a deformable seal is provided in the groove which is urged into sealing engagement with a facing end wall of the cavity in the system housing when the end cap has been displaced relative to the body by means of the wedging member. It can be preferred that a groove is formed in the external face of the end wall of the shuttle valve module body and a groove is formed in the external face of the end cap, with a deformable seal provided in each of the grooves. A suitable deformable seal can be provided by an O-ring which can be fitted in such a groove.

The selection of the material for the deformable seal will depend on factors which include the materials with which the seal will come into contact when in use. The material should be one which is not affected adversely by materials with which the seal will come into contact. Polymeric materials and rubbers will be useful for many applications. An example of a suitable rubber might be an acrylonitrile-butadiene rubber. A suitable material can have a hardness measured on the Shore A scale of 70.

Optionally, at least a part of the surface of the seal member is rounded. For example, at least a part of the surface of the seal member can be shaped as a sphere. It can be advantageous that the surface of the seal member that contacts the end wall of the chamber in the shuttle module is rounded, especially shaped as a sphere, because this facilitates formation of a seal between the seal member and the end wall of the chamber, with reduced dependence on the orientation of the seal member. Frequently the seal member will be spherical.

When the seal member is spherical and the chamber in the shuttle valve module is cylindrical with a circular cross-section, the ratio of the diameter of the seal member to the diameter of the chamber can be at least about 0.95, optionally at least about 0.98, for example at least about 0.99.

Optionally, at least the part of the surface of the seal member which contacts the end wall of the chamber in the shuttle valve module is provided by a deformable material. It will generally be convenient for all of the surface of the seal member to be provided by a deformable material. The use of a deformable material can facilitate the formation of a seal between the seal member and the end wall of the chamber because the deformable material is better able to conform to the surface of the end wall of the chamber.

The selection of the material for the seal member will depend on factors which include the materials with which the seal member will come into contact when in use. The material should be one which is not affected adversely by materials with which the seal member will come into contact. Polymeric materials and rubbers will be useful for many applications. An example of a suitable rubber might be an acrylonitrile-butadiene rubber. A suitable material can have a hardness measured on the Shore A scale of 90.

Optionally, the internal face of at least one of the end walls of the shuttle valve module is conical, with a constant angle of inclination, at least over part of the wall, relative to the axis of the module which extends between the end walls. For example, the angle between the internal face of the end wall and the module axis can be at least about 25°, optionally at least about 35°. The angle between the internal face of the end wall and the module axis can be not more than about 60°, optionally not more than about 50°. The conical part of the or each internal face is preferably arranged so that it is contacted by the seal member. The provision of one or more conical internal faces can mean that the seal member contacts and forms a seal to a conical surface. The partial cone defined by the surface will be a right circular cone when the cavity within the module is circular when viewed in cross-section. This can facilitate formation of a seal, especially when the seal member is spherical.

The materials from which components such as the system housing, the shuttle valve module body, the shuttle valve module end cap and the wedging member are made will depend on factors which include the materials with which the components will come into contact when in use. The material should be one which is not affected adversely by materials with which the components will come into contact. It might be that the material used to make one or more of the components is different from the material that is used to make one or more other of the components. Polymeric materials might be useful for some applications, for example with reinforcement such as by fibres. The use of a polymeric material to make a component has the advantage that a component can be made by moulding. Metals might be useful for some applications. Examples of suitable metals might include certain stainless steels, and aluminium and its alloys. The use of a metal to make a component has the advantage that it can have a greater ability to withstand impact and a greater resistance to wear compared with some polymeric materials.

The shuttle valve can be used to control the flow of a fluid from a single source to a selected one of two downstream applications where the selection of the downstream application is determined by the position of the seal member in the chamber in the valve module. When the shuttle valve is used in this application, it can be necessary to incorporate means for moving the seal member from one end of the chamber in the valve module to the other end, so as to switch the flow of fluid between the two downstream applications.

The shuttle valve can be used to control the flow of fluid from two fluid sources to a downstream application, in particular in the selection of which of those fluid sources the fluid flows from. The seal member can be made to move from one end of the chamber in the valve module to the other end, so as to switch the flow of fluid between the two fluid sources, by the action on the seal member of the fluid.

An example of an application in which the shuttle valve can be used is a pressure swing adsorption system which includes first and second chambers, each containing an adsorption medium, in which a fluid can be directed to flow over the adsorption medium in one of the chambers while the adsorption medium in the other of the chambers is regenerated by desorption of adsorbed contaminants. The chambers of a pressure swing adsorption system are frequently referred to as columns. They are often elongate with an identifiable axis. Columns which are not necessarily elongate, or which do not have an identifiable axis might be used.

The chambers of a pressure swing adsorption system are switched between online and regeneration modes when the ability of the adsorption medium in the online chamber to adsorb more contaminants is reduced below a threshold. Fluid from the chambers is discharged into a common outlet conduit via the shuttle valve.

Accordingly, a pressure swing adsorption system includes first and second chambers, each containing an adsorption medium, in which a fluid can be directed to flow over the adsorption medium in one of the chambers while the adsorption medium in the other of the chambers is regenerated by desorption of adsorbed contaminants, the system comprising:
a. a first outlet conduit through which fluid which has flowed over the adsorption medium in the first chamber is discharged from the first chamber,
b. a second outlet conduit through which fluid which has flowed over the adsorption medium in the second chamber is discharged from the second chamber,
c. a delivery conduit through which fluid can be supplied from the system to a downstream application, and
d. a shuttle valve having features as discussed above, in which the first outlet conduit is connected to the first port, the second outlet conduit is connected to the second port, and the delivery conduit is connected to the third port.

The pressure swing adsorption system can be used to remove contaminants from a gas stream. For example, it can be used to remove liquid contaminants from a gas stream. An example of such an application can be a dryer for a compressed gas (including air) in which water in the form of vapour and liquid droplets is removed by adsorption. The pressure swing adsorption system can be used to remove a component from a mixture of gases. An example of such an application can be a system for removing oxygen from a mixture of oxygen and nitrogen (air) for the purpose of generating nitrogen.

The selection of an appropriate adsorption medium will depend on the constituents of fluid which is to be treated in the system and, in particular, on the constituents of the fluid which are to be adsorbed as contaminants. Appropriate adsorption media for many applications are very well known and used in existing pressure swing adsorption systems, and can be used in systems which include shuttle valves according to this invention.

The pressure swing adsorption system can include heaters which can be used selectively to heat the adsorbent material in the chamber which is being regenerated to facilitate the desorption of adsorbed contaminants.

Shuttle valves and applications for shuttle valves are described below by way of example with reference to the accompanying drawings, in which:
Figure 1 is a schematic flow chart showing a pressure swing adsorption dryer for a compressed gas.
Figure 2 is an isometric view of a shuttle valve module which has a seal member inside it and which has a wedging member in place.
Figure 3 is an exploded isometric view of the shuttle valve module shown in Figure 2.
Figure 4 is a sectional elevation through the body and end cap of the shuttle valve module shown in Figure 2.
Figure 5 is a sectional elevation through the shuttle valve module shown in Figure 2 with the wedging member in place.
Figure 6 is an isometric view, partially exploded, of a pressure swing adsorption dryer according to Figure 1 which includes a shuttle valve having a module as shown in Figures 2 to 5.

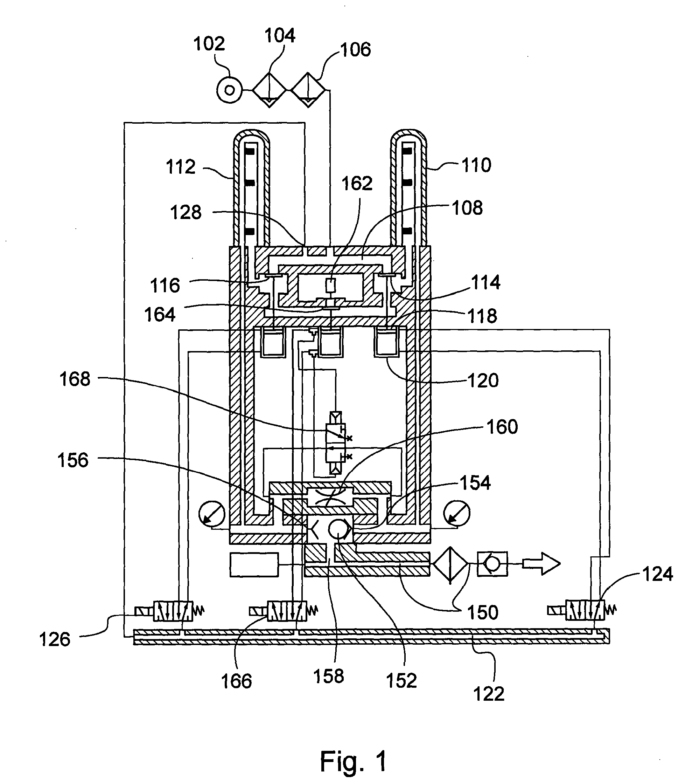

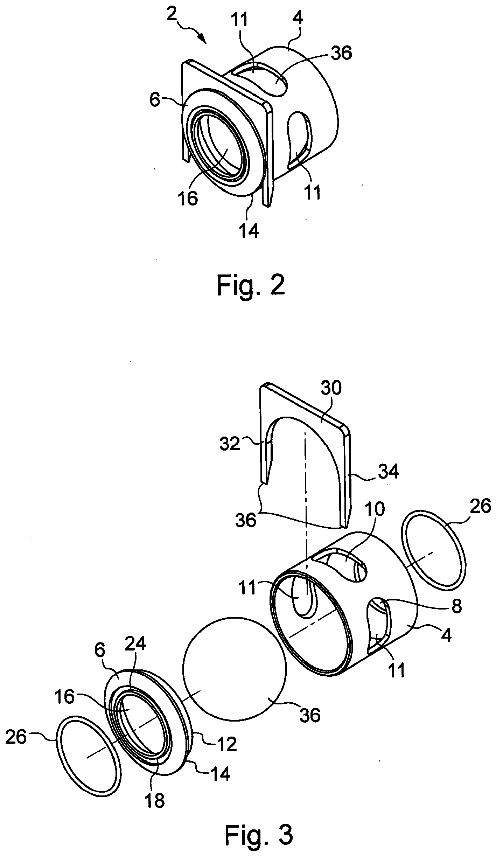

The shuttle valve provided by the invention can be used in a pressure swing adsorption system for treating a fluid, which has features which are apparent from Figures 1 and 2. For example the system might be used to remove moisture from a compressed gas such as compressed air.

Referring to the drawings, Figure 1 is a schematic flow chart showing features of such a system has an inlet 102 for a pressurised gas with separators 104, 106 for removing bulk water. The gas is delivered from the separators to an inlet manifold 108. First and second chambers 110, 112 are connected to the inlet manifold 108. Each of the chambers contains an adsorbent material. The nature of the adsorbent material will depend on the nature of the contaminants which are to be removed from the compressed fluid. For example, the adsorbent material will be a desiccant when the system is used to remove moisture from a compressed gas such as compressed air.

First and second inlet valves 114, 116 control flow of gas from the inlet manifold 108 to the first and second chambers. The first inlet valve 114 is controlled by means of a piston and cylinder arrangement, where the position of the piston 118 in the cylinder 120 is controlled by means of a flow of pilot gas from a pilot gas manifold 122. The flow of gas from the pilot gas manifold 122 to the first inlet valve 114 is controlled by means of a first 5:2 valve 124. Similarly, the second inlet valve is controlled by means of a piston and cylinder arrangement, which is controlled by means of a second 5:2 valve 126. Pressure is maintained in the pilot gas manifold by means of compressed gas which is supplied from the inlet manifold 108 through a pilot gas port 128.

Gas which has been treated in the chambers 110, 112 is discharged from the system through a system outlet conduit 150. A shuttle valve 152 controls the flow of the treated gas between one of the chambers and the outlet.

The shuttle valve 152 has a first port 154 through which the gas stream is received from the first chamber 110 and a second port 156 through which the gas stream is received form the second chamber 112. The shuttle valve has a third port 158 through which treated gas is discharged from the system. The shuttle valve has two positions. In the position shown in Figure 1, the shuttle valve allows flow of treated gas from the second chamber 112 through the second port 156, and through the third port 158 into the outlet conduit 150. The shuttle valve shuts off flow of fluid from the second chamber into the valve.

Operation of a pressure switching adsorption system involves regenerating the adsorbent material in one chamber while the other chamber is adsorbing contaminants from the pressurised fluid. This is achieved in the system shown in Figure 1 by means of a purge stream which is taken from the gas which has been treated in the second chamber 112. The purge stream is admitted to the first chamber through a flow restrictor 160. The purge stream is vented to atmosphere through an exhaust 162, controlled by an exhaust valve 164. The exhaust valve is controlled by means of a piston and cylinder arrangement, where the position of the piston in the cylinder is controlled by means of a flow of pilot gas from the pilot gas manifold 122. The flow of gas from the pilot gas manifold 122 to the exhaust valve 164 is controlled by means of a third 5:2 valve 166. Details of a flow restrictor which can be used in the system are disclosed in the International patent application filed with the present application, title A PRESSURE SWING ADSORPTION SYSTEM WITH A VARIABLE FLOW RESTRICTOR, and which was the subject of UK patent application no. 1705122.8 (from which the present application claims priority) and published as WO-2018/178663A1. Preferably, the flow restrictor is arranged so that the rate of flow of fluid through the purge conduit is sufficient to achieve a purge of adsorbed contaminants on the adsorbent material in the chamber which is to be regenerated. The purge should be achieved in the offline part of the operating cycle (which lasts 149 seconds during the 360 second operating cycle in the example discussed below).

The system can include a re-pressurisation valve 168 which allows the flow restrictor 160 to be by-passed. The re-pressurisation valve has two positions. Gas can by-pass the flow restrictor when the re-pressurisation valve is in its open position as shown in Figure 1. Gas is prevented from by-passing the flow restrictor by the re-pressurisation valve when it is in its closed position. The re-pressurisation valve is controlled with the piston and cylinder arrangement of the exhaust valve by means of the flow of pilot gas from the pilot gas manifold so that the re-pressurisation valve is in its open position, allowing gas to by-pass the flow restrictor, when the exhaust valve is closed. The re-pressurisation valve is in its closed position, preventing gas from by-passing the flow restrictor, when the exhaust valve is open.

Details of the operation of a pressure swing adsorption system are known. The period in which a first chamber is online for treatment of the compressed air or other fluid will be determined according to the nature of the fluid, the nature of the contaminant materials in the fluid which are to be adsorbed, the amount of contaminant materials in the fluid and so on. It is usual for the period in which the second chamber is regenerated by exposure to the purge stream to be less than the period in which the first chamber is online, to allow a period in which the exhaust valve is closed and the re-pressurisation valve (if present) is open and in which the pressure in the second chamber increases to a level which is close or equal to that in the first chamber. For example, a typical system might run with a 360 second operating cycle, in which one chamber is online, with its inlet valve open, for a period of 180 seconds. The other chamber is offline for the whole of that period by maintaining its inlet valve closed. The exhaust valve is opened one second into that cycle, and remains open for 149 seconds. The exhaust valve is then closed, causing the re-pressurisation valve to switch to its open position, for the remaining 30 seconds of that phase of the operating cycle. This sequence is then repeated with the roles of the two chambers reversed.

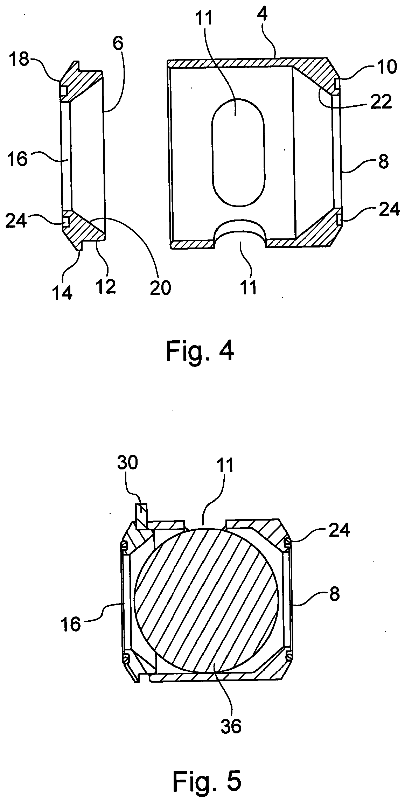

Figure 2 to 5 show components of a shuttle valve which can be used to control the flow of fluid between one of first and second primary conduits and a secondary conduit. The shuttle valve includes a module 2 which can be fitted in a cavity in a system housing where the system housing has ports for connection to the primary conduits and the secondary conduit.

The shuttle valve module comprises a body 4 and an end cap 6. The body 4 is hollow. It is open at one end and has an opening 8 in the end wall 10 at its opposite end. The module body has openings 11 in its side walls, between the ends of the module. The end cap 6 has a cylindrical portion 12 which is a sliding fit in the valve module body at its open end and a flange 14 whose diameter is larger than the internal diameter of the body at its open end. The end cap has an opening 16 in its end wall 18.

Each of the internally facing surfaces 20, 22 provided by the end walls 10, 18 is arranged at an angle of about 40° to the axis of the module which extends between the end walls when the module is viewed in cross-section from one side. The internally facing surface provided by each of the end walls is the surface of a truncated cone. The cone aperture of the cone is about 80°.

Each of the end walls 10, 18 provided by the module body and the end cap has a groove 24 formed in it. An O-ring seal 26 is provided in each of the grooves 24. An appropriate material for the O-ring seal might be an acrylonitrile-butadiene rubber for some applications.

A wedging member 30 is approximately U-shaped with first and second limbs 32, 34. The spacing between the limbs is approximately the same as, or slightly larger than, the external diameter of the cylindrical portion 12 of the end cap. The internal surface of the wedging member extending between the limbs is rounded, defining a part of a circle. The diameter of the circle is approximately the same as, or slightly larger than, the external diameter of the cylindrical portion 12 of the end cap.

The tips 36 of each of the limbs 32, 34 of the wedging member is tapered towards a knife-like edge. The thickness of each of the limbs is less than the axial length of cylindrical portion 12 of the end cap 6.

A spherical seal member 36 is provided within the shuttle valve module. The ratio of the diameter of the seal member to the diameter of the cavity in the module is about 0.98. The spherical seal member might be formed from a resilient material such as an acrylonitrile-butadiene rubber, for example with a hardness measured on the Shore A scale of 90.

In an example of a suitable construction, the internal diameter of the body of the module is about 41.6 mm and the external diameter of the cylindrical portion of the end cap is about 41.4 mm. The external diameters of the end cap flange and of the body of the module are both about 46 mm. The axial length of the cylindrical portion of the end cap can be about 5 mm. The distance between the limbs of the wedging member can be about 41.5 mm. The length of each of the tapered tips of the limbs can be about 8 mm. The thickness of the limbs beyond the tapered tip can be about 3 mm. The depth of the grooves in the end walls of the module can be about 1.3 mm and the diameter of the rubber body of the O-rings which are fitted into the grooves is about 1.78 mm. The diameter of the openings in the end walls of the module is about 27 mm and the external diameter of the grooves in the end walls for the O-rings is about 35 mm. The diameter of the seal member can be about 41.3 mm.

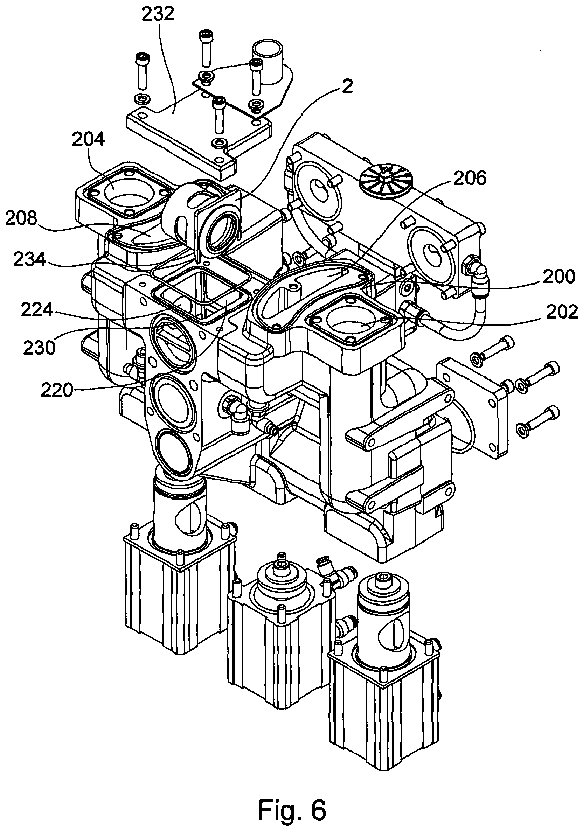

Figure 6 shows components of the system which is described above with reference to Figure 1. The system includes mounts 200 for the chambers of the adsorbent material, with first openings 202, 204 to the chambers which communicate with the inlet manifold, and second openings 206, 208 from which treated fluid flows to a shuttle valve.

Figure 6 shows a cavity 220 in a system housing. The cavity has first and second end walls. Each of the end walls has a port formed in it. The first end wall, with its port 224, is visible in Figure 6. A port 226 is provided in the side wall 228.

The cavity 220 has an opening 230 in its top face. The opening can be closed by means of a closure plate 232. An O-ring seal 234 positioned in a groove which surrounds the opening can seal the cavity.

The shuttle valve module 2 can be inserted into the cavity 220 in the system housing through the opening 230 in the top face of the cavity. The length of the shuttle valve module, measured between the exposed surfaces of the O-ring seals 26 in the grooves 24 in the end walls 10, 18 of the module body and the end cap when the end cap is inserted fully into the module housing without the wedging member 30 in place, is less than the length of the opening. It is therefore possible to insert the module into the cavity without resistance caused by engagement of the O-ring seals 26 with the end walls of the housing.

Once the shuttle valve module 2 is in place within the cavity, the wedging member can be inserted between the flange 14 of the end cap and the adjacent end of the module body. The wedging member can cause the end cap to slide out of the chamber defined by the module body, progressively increasing the length of the shuttle valve module, measured between the exposed surfaces of the O-ring seals 26 in the end walls 10, 18 of the module body and the end cap. The O-ring seals are then compressed between the end walls of the valve module and the facing end walls of the cavity in the housing so that fluid entering the cavity through one of the ports in the end walls of the cavity can only access the space within the cavity which surrounds the housing (and which communicates with the third port 226 in the side wall of the cavity) by flowing through the chamber within the valve module.

The shuttle valve module can be removed from the cavity in the housing by removing the wedging member from between the flange of the end cap and the adjacent end of the module body. This allows the end cap to slide into the module body so that the length of the module reduces.

In the example described above, the length of the module measured between the end faces of the body and end cap is 44.75 mm without the wedging member in place and 47.75 mm with the wedging member in place. The length of the cavity measured between the cavity end faces which are contacted by the O-rings on the module end faces is 48 mm.

## Claims

1. A shuttle valve module assembly for fitting in a cavity (220) in a valve housing to control flow of fluid between one of first (154) and second (156) primary ports in the housing and a secondary port (158) in the housing, the assembly comprising:
a. a shuttle valve module (2) having first (18) and second (10) end walls and a side wall, and an elongate chamber extending between the end walls, the end walls and the side wall having first (16), second (8) and third (11) openings respectively which can communicate with first (154), second (156) and third (158) ports respectively in a valve housing,
b. a seal member (36) which can move within the elongate chamber in the shuttle valve module (2) between a first position in which it forms a seal which prevents flow of fluid between the first opening (16) and the third opening (11) while allowing flow of fluid between the second opening (8) and the third opening (11), and a second position in which it forms a seal which prevents flow of fluid between the second opening (8) and the third opening (11) while allowing flow of fluid between the first opening (16) and the third opening (11),
**characterised in that** the shuttle valve assembly further comprises:
c. a wedging member (30),
and **in that** the shuttle valve module (2) comprises a body (4) and an end cap (6) which provides one of the end walls (18) of the shuttle valve module, the body (4) and the end cap (6) being arranged so that one can slide relative to the other telescopically, and so that the wedging member (30) can be inserted between the body (4) and the end cap (6) to cause the end cap (6) to be displaced relative to the body (4) so as to increase the distance between the first (18) and second (10) end walls of the module.

2. A shuttle valve module assembly as claimed in claim 1, in which the end cap (6) has a cylindrical portion (12) which is a sliding fit in the body (4) of the shuttle valve module (2), and a flange (14).

3. A shuttle valve module assembly as claimed in claim 2, in which the wedging member (30) can be fitted between the flange (14) of the end cap (6) and the end wall of the module body (4) at the end of the body in which the cylindrical portion (12) of the end cap (6) is received.

4. A shuttle valve module assembly as claimed in claim 3, in which the wedging member (30) comprises first and second limbs (32, 34) which can be fitted between the end cap flange (14) and the end wall of the body on first and second opposite sides of the axis of the module (2) which extends between its end walls (10, 18).

5. A shuttle valve module assembly as claimed in claim 4, in which the first and second limbs (32, 34) of the wedging member (30) are joined together.

6. A shuttle valve module assembly as claimed in any one of claims 1 to 5, in which the wedging member (30) has a tapered lead-in portion (36).

7. A shuttle valve module assembly as claimed in any one of claims 1 to 6, in which a groove (24) is provided in the external face of at least one of the end walls (10, 18) of the shuttle valve module (2) and a deformable seal (26) is provided in the groove which is urged into sealing engagement with a facing end wall of the cavity (220) in the system housing when the end cap (6) has been displaced relative to the body (4) by means of the wedging member (30).

8. A shuttle valve module assembly as claimed in any one of claims 1 to 7, in which at least a part of the surface of the seal member (36) is shaped as a sphere.

9. A shuttle valve module assembly as claimed in any one of claims 1 to 9, in which the surface of the seal member (36) is provided by a deformable material.

10. A shuttle valve module assembly as claimed in any one of claims 1 to 9, in which the internal face (20, 22) of at least one of the end walls (18, 10) of the shuttle valve module (2) is inclined relative to the axis of the module which extends between the end walls.

11. A shuttle valve (152) which includes a shuttle valve module assembly as claimed in any one of claims 1 to 10, and which includes a system housing which defines a cavity (220) in which the shuttle valve module (2) can be fitted, the cavity (220) having first and second end walls and a side wall (228), with a first port (224) in the first wall for connection to a first primary conduit, a second port in the second wall for connection to a second primary conduit, and a third port (226) in the side wall (228) for connection to a secondary conduit.

12. A shuttle valve (152) as claimed in claim 11, in which the ratio of the width of the wedging member (30) to the distance between the end walls of the cavity (220) in the system housing is at least 0.04.

13. A shuttle valve (152) as claimed in claim 11 or claim 12, in which the ratio of the width of the wedging member (30) to the distance between the end walls of the cavity (220) in the system housing is not more than 0.12.

14. A pressure swing adsorption system which includes first and second chambers (110, 112), each containing an adsorption medium, in which a fluid can be directed to flow over the adsorption medium in one of the chambers while the adsorption medium in the other of the chambers (110, 112) is regenerated by desorption of adsorbed contaminants, the system comprising:
a. a first outlet conduit through which fluid which has flowed over the adsorption medium in the first chamber (110) is discharged from the first chamber,
b. a second outlet conduit through which fluid which has flowed over the adsorption medium in the second chamber (112) is discharged from the second chamber,
c. a delivery conduit (150) through which fluid can be supplied from the system to a downstream application,
d. a shuttle valve (152) as claimed in any one of claims 11 to 13, in which the first outlet conduit is connected to the first port (224), the second outlet conduit is connected to the second port, and the delivery conduit is connected to the third port (226).

## Patentansprüche

1. Wechselventilmodulbaugruppe zum Einpassen in einen Hohlraum (220) in einem Ventilgehäuse zum Steuern von Strömung von Fluid zwischen einem eines ersten (154) und zweiten (156) primären Durchlasses im Gehäuse und einem sekundären Durchlass (158) im Gehäuse, die Baugruppe umfassend:
a) ein Wechselventilmodul (2) mit ersten (18) und zweiten (10) Endwänden und einer Seitenwand und einer gestreckten Kammer, die zwischen den Endwänden verläuft, wobei die Endwände und die Seitenwand jeweils erste (16), zweite (8) und dritte (11) Öffnungen aufweisen, die jeweils mit ersten (154), zweiten (156) bzw. dritten (158) Durchlässen in einem Ventilgehäuse kommunizieren können,
b) ein Dichtungselement (36), das sich innerhalb der gestreckten Kammer im Wechselventilmodul (2) zwischen einer ersten Position, in der es eine Dichtung ausbildet, die Strömung von Fluid zwischen der ersten Öffnung (16) und der dritten Öffnung (11) verhindert, während sie Strömung von Fluid zwischen der zweiten Öffnung (8) und der dritten Öffnung (11) zulässt, und einer zweiten Position bewegen kann, in der es eine Dichtung ausbildet, die Strömung von Fluid zwischen der zweiten Öffnung (8) und der dritten Öffnung (11) verhindert, während sie Strömung von Fluid zwischen der ersten Öffnung (16) und der dritten Öffnung (11) zulässt,
**dadurch gekennzeichnet, dass** die Wechselventilbaugruppe ferner umfasst:
c) ein Keilelement (30),
und dass das Wechselventilmodul (2) einen Körper (4) und eine Endkappe (6) umfasst, die eine der Endwände (18) des Wechselventilmoduls vorsieht, wobei der Körper (4) und die Endkappe (6) derart angeordnet sind, dass eines bezüglich des anderen teleskopartig gleiten kann, und derart, dass das Keilelement (30) zwischen den Körper (4) und die Endkappe (6) eingefügt werden kann, um zu bewirken, dass die Endkappe (6) bezüglich des Körpers (4) verschoben wird, um den Abstand zwischen der ersten (18) und zweiten (10) Endwand des Moduls zu erhöhen.

2. Wechselventilmodulbaugruppe nach Anspruch 1, wobei die Endkappe (6) einen zylindrischen Abschnitt (12), der eine Gleitpassung im Körper (4) des Wechselventilmoduls (2) ist, und einen Flansch (14) aufweist.

3. Wechselventilmodulbaugruppe nach Anspruch 2, wobei das Keilelement (30) zwischen dem Flansch (14) der Endkappe (6) und der Endwand des Modulkörpers (4) an dem Ende des Körpers, in dem der zylindrische Abschnitt (12) der Endkappe (6) aufgenommen ist, eingepasst sein kann.

4. Wechselventilmodulbaugruppe nach Anspruch 3, wobei das Keilelement (30) erste und zweite Glieder (32, 34) umfasst, die zwischen dem Endkappenflansch (14) und der Endwand des Körpers auf ersten und zweiten gegenüberliegenden Seiten der Achse des Moduls (2), die zwischen seinen Endwänden (10, 18) verläuft, eingepasst sein können.

5. Wechselventilmodulbaugruppe nach Anspruch 4, wobei die ersten und zweiten Glieder (32, 34) des Keilelements (30) aneinandergefügt sind.

6. Wechselventilmodulbaugruppe nach einem der Ansprüche 1 bis 5, wobei das Keilelement (30) einen sich verjüngenden Einführungsabschnitt (36) aufweist.

7. Wechselventilmodulbaugruppe nach einem der Ansprüche 1 bis 6, wobei eine Nut (24) in der Außenseitenfläche von zumindest einer der Endwände (10, 18) des Wechselventilmoduls (2) vorgesehen ist und eine verformbare Dichtung (26) in der Nut vorgesehen ist, die in Abdichtungseingriff mit einer zugekehrten Endwand des Hohlraums (220) im Systemgehäuse gedrängt ist, wenn die Endkappe (6) mittels des Keilelements (30) bezüglich des Körpers (4) verschoben wurde.

8. Wechselventilmodulbaugruppe nach einem der Ansprüche 1 bis 7, wobei zumindest ein Teil der Oberfläche des Dichtungselements (36) kugelförmig ist.

9. Wechselventilmodulbaugruppe nach einem der Ansprüche 1 bis 9, wobei die Oberfläche des Dichtungselements (36) durch ein verformbares Material vorgesehen ist.

10. Wechselventilmodulbaugruppe nach einem der Ansprüche 1 bis 9, wobei die Innenseitenfläche (20, 22) von zumindest einer der Endwände (18, 10) des Wechselventilmoduls (2) bezüglich der Achse des Moduls, die zwischen den Endwänden verläuft, geneigt ist.

11. Wechselventil (152), das eine Wechselventilmodulbaugruppe nach einem der Ansprüche 1 bis 10 enthält, und das ein Systemgehäuse enthält, welches einen Hohlraum (220) definiert, in den das Wechselventilmodul (2) eingepasst sein kann, wobei der Hohlraum (220) erste und zweite Endwände und eine Seitenwand (228) aufweist, wobei ein erster Durchlass (224) in der ersten Wand zur Verbindung mit einer ersten primären Leitung dient, ein zweiter Durchlass in der zweiten Wand zur Verbindung mit einer zweiten primären Leitung dient und ein dritter Durchlass (226) in der Seitenwand (228) zur Verbindung mit einer sekundären Leitung dient.

12. Wechselventil (152) nach Anspruch 11, wobei das Verhältnis der Breite des Keilelements (30) zum Abstand zwischen den Endwänden des Hohlraums (220) im Systemgehäuse zumindest 0,4 ist.

13. Wechselventil (152) nach Anspruch 11 oder 12, wobei das Verhältnis der Breite des Keilelements (30) zum Abstand zwischen den Endwänden des Hohlraums (220) im Systemgehäuse nicht mehr als 0,12 ist.

14. Druckwechseladsorptionssystem, das erste und zweite Kammern (110, 112) enthält, die jede ein Adsorptionsmedium enthalten, wobei ein Fluid zum Strömen über das Adsorptionsmedium in einer der Kammern geleitet werden kann, während das Adsorptionsmedium in der anderen der Kammern (110, 112) durch Desorption von adsorbierten Schmutzstoffen regeneriert wird, das System umfassend:
a) eine erste Auslassleitung, durch die Fluid, das über das Adsorptionsmedium in der ersten Kammer (110) geströmt ist, aus der ersten Kammer abgelassen wird,
b) eine zweite Auslassleitung, durch die Fluid, das über das Adsorptionsmedium in der zweiten Kammer (112) geströmt ist, aus der zweiten Kammer abgelassen wird,
c) eine Zuleitung (150), durch die Fluid aus dem System einer stromabwärtigen Anwendung zugeführt werden kann,
d) ein Wechselventil (152) nach einem der Ansprüche 11 bis 13, wobei die erste Auslassleitung mit dem ersten Durchlass (224) verbunden ist, die zweite Auslassleitung mit dem zweiten Durchlass verbunden ist und die Zuleitung mit dem dritten Durchlass (226) verbunden ist.

## Revendications

1. Ensemble de module de clapet-navette à monter dans une cavité (220) dans un boîtier de clapet pour commander l'écoulement de fluide entre l'un des premier (154) et deuxième (156) orifices primaires dans le boîtier et un orifice secondaire (158) dans le boîtier, l'ensemble comprenant :
a. un module de clapet- navette (2) ayant des première (18) et deuxième (10) parois d'extrémité et une paroi latérale, et une chambre allongée s'étendant entre les parois d'extrémité, les parois d'extrémité et la paroi latérale ayant respectivement des première (16), deuxième (8) et troisième (11) ouvertures qui peuvent communiquer respectivement avec des premier (154), deuxième (156) et troisième (158) orifices dans un boîtier de clapet,
b. un élément d'étanchéité (36) qui peut se déplacer à l'intérieur de la chambre allongée dans le module de clapet-navette (2) entre une première position dans laquelle il forme un joint d'étanchéité qui empêche l'écoulement de fluide entre la première ouverture (16) et la troisième ouverture (11) tout en permettant l'écoulement de fluide entre la deuxième ouverture (8) et la troisième ouverture (11), et une deuxième position dans laquelle il forme un joint d'étanchéité qui empêche l'écoulement de fluide entre la deuxième ouverture (8) et la troisième ouverture (11) tout en permettre l'écoulement de fluide entre la première ouverture (16) et la troisième ouverture (11),
**caractérisé en ce que** l'ensemble de clapet-navette comprend en outre :
c. un élément de calage (30),
et **en ce que** le module de clapet-navette (2) comprend un corps (4) et un capuchon d'extrémité (6) qui constitue l'une des parois d'extrémité (18) du module de clapet-navette, le corps (4) et le capuchon d'extrémité (6) étant agencés de manière à ce que l'un puisse coulisser par rapport à l'autre de manière télescopique, et de manière à ce que l'élément de calage (30) puisse être inséré entre le corps (4) et le capuchon d'extrémité (6) pour provoquer le déplacement du capuchon d'extrémité (6) par rapport au corps (4) de manière à augmenter la distance entre les première (18) et deuxième (10) parois d'extrémité du module.

2. Ensemble de module de clapet-navette selon la revendication 1, dans lequel le capuchon d'extrémité (6) a une partie cylindrique (12) qui représente un ajustement coulissant dans le corps (4) du module de clapet-navette (2), et une bride (14).

3. Ensemble de module de clapet-navette selon la revendication 2, dans lequel l'élément de calage (30) peut être monté entre la bride (14) du capuchon d'extrémité (6) et la paroi d'extrémité du corps de module (4) au niveau de l'extrémité du corps dans laquelle est reçue la partie cylindrique (12) du capuchon d'extrémité (6).

4. Ensemble de module de clapet-navette selon la revendication 3, dans lequel l'élément de calage (30) comprend des première et deuxième branches (32, 34) qui peuvent être montées entre la bride de capuchon d'extrémité (14) et la paroi d'extrémité du corps sur des premier et deuxième côtés opposés de l'axe du module (2) qui s'étend entre ses parois d'extrémité (10, 18).

5. Ensemble de module de clapet-navette selon la revendication 4, dans lequel les première et deuxième branches (32, 34) de l'élément de calage (30) sont réunies ensemble.

6. Ensemble de module de clapet-navette selon l'une quelconque des revendications 1 à 5, dans lequel l'élément de calage (30) a une partie d'entrée effilée (36).

7. Ensemble de module de clapet-navette selon l'une quelconque des revendications 1 à 6, dans lequel une rainure (24) est prévue dans la face externe d'au moins l'une des parois d'extrémité (10, 18) du module de clapet-navette (2) et un joint d'étanchéité déformable (26) est prévu dans la rainure qui est sollicitée en engagement étanche avec une paroi d'extrémité opposée de la cavité (220) dans le boîtier de système lorsque le capuchon d'extrémité (6) a été déplacé par rapport au corps (4) au moyen de l'élément de calage (30).

8. Ensemble de module de clapet-navette selon l'une quelconque des revendications 1 à 7, dans lequel au moins une partie de la surface de l'élément d'étanchéité (36) a la forme d'une sphère.

9. Ensemble de module de clapet-navette selon l'une quelconque des revendications 1 à 9, dans lequel la surface de l'élément d'étanchéité (36) est constituée par un matériau déformable.

10. Ensemble de module de clapet-navette selon l'une quelconque des revendications 1 à 9, dans lequel la face interne (20, 22) d'au moins l'une des parois d'extrémité (18, 10) du module de clapet-navette (2) est inclinée par rapport à l'axe du module qui s'étend entre les parois d'extrémité.

11. Clapet-navette (152) qui comporte un ensemble de module de clapet-navette selon l'une quelconque des revendications 1 à 10, et qui comporte un boîtier de système qui définit une cavité (220) dans laquelle le module de clapet-navette (2) peut être monté, la cavité (220) ayant des première et deuxième parois d'extrémité et une paroi latérale (228), avec un premier orifice (224) dans la première paroi destiné à être relié à un premier conduit primaire, un deuxième orifice dans la deuxième paroi destiné à être relié à un deuxième conduit primaire, et un troisième orifice (226) dans la paroi latérale (228) destiné à être relié à un conduit secondaire.

12. Clapet-navette (152) selon la revendication 11, dans lequel le rapport de la largeur de l'élément de calage (30) sur la distance entre les parois d'extrémité de la cavité (220) dans le boîtier de système est d'au moins 0,04.

13. Clapet-navette (152) selon la revendication 11 ou 12, dans lequel le rapport de la largeur de l'élément de calage (30) sur la distance entre les parois d'extrémité de la cavité (220) dans le boîtier de système ne dépasse pas 0,12.

14. Système d'adsorption modulée en pression qui comporte des première et deuxième chambres (110, 112), chacune contenant un milieu d'adsorption, dans lequel un fluide peut être dirigé pour s'écouler sur le milieu d'adsorption dans l'une des chambres tandis que le milieu d'adsorption dans l'autre des chambres (110, 112) est régénéré par désorption de contaminants adsorbés, le système comprenant :
a. un premier conduit de sortie à travers lequel le fluide qui s'est écoulé sur le milieu d'adsorption dans la première chambre (110) est évacué de la première chambre,
b. un deuxième conduit de sortie à travers lequel le fluide qui s'est écoulé sur le milieu d'adsorption dans la deuxième chambre (112) est évacué de la deuxième chambre,
c. un conduit de distribution (150) à travers lequel le fluide peut être fourni du système à une application en aval,
d. un clapet-navette (152) selon l'une quelconque des revendications 11 à 13, dans lequel le premier conduit de sortie est relié au premier orifice (224), le deuxième conduit de sortie est relié au deuxième orifice, et le conduit de distribution est relié au troisième orifice (226).
